# EUROPÄISCHE PATENTSCHRIFT

(11) **EP 3 914 836 B1**
(45) Veröffentlichungstag und Bekanntmachung des Hinweises auf die Patenterteilung: **13.11.2024**
(21) Anmeldenummer: 20701983.7
(22) Anmeldetag: 23.01.2020
(51) Int. Cl.: F16G 13/16

(54) **QUERSTEG UND KETTENGLIED MIT QUERSTEG**
CROSSBAR AND CHAIN LINK HAVING CROSSBAR
TRAVERSE ET MAILLON AVEC TRAVERSE

(30) Priorität: 25.01.2019 DE 202019100434 U
(43) Veröffentlichungstag der Anmeldung: 01.12.2021
(73) Patentinhaber: Igus GmbH, 51147 Köln (DE)
(72) Erfinder: THEISS, Georg, 50678 Köln (DE); HERMEY, Andreas, 53773 Hennef (DE)
(74) Vertreter: Lippert Stachow Patentanwälte Rechtsanwälte
(86) Internationale Anmeldenummer: PCT/EP2020/051617
(87) Internationale Veröffentlichungsnummer: WO 2020/152263

(56) Entgegenhaltungen:
- JP-A- 2000 145 897

## Beschreibung

Die Erfindung betrifft einen Quersteg zur lösbaren Verbindung zweier Seitenteile eines Kettengliedes einer Energieführungskette, wobei der Quersteg zumindest an einem oder an beiden seiner Enden einen Befestigungsbereich zur lösbaren Festlegung an dem jeweiligen Seitenteil aufweist und wobei der Befestigungsbereich des Quersteges ein Verriegelungselement umfasst, welches in eine Verriegelungsstellung und eine Entriegelungsstellung überführbar ist, wobei in der Verriegelungsstellung der Quersteg unlösbar an dem Seitenteil festgelegt ist und in der Entriegelungsstellung der Quersteg von dem Seitenteil lösbar ist, wobei das Verriegelungselement einen Betätigungsabschnitt zur wahlweisen Überführung desselben in seine Verriegelungs- oder Entriegelungsstellung umfasst, sowie einen Verriegelungsabschnitt zum verriegelnden Angriff an dem Seitenteil aufweist, wobei das Verriegelungselement als Schwenkteil ausgebildet ist und bei Betätigung des Verriegelungselementes der Verriegelungsabschnitt zumindest in einem Teil seiner Bewegung von der Verriegelungsstellung in seine Entriegelungsstellung oder umgekehrt in einer Schwenkbewegung bewegt wird. Ferner betrifft die Erfindung eine Seitenlasche eines Gliedes einer Energieführungskette bzw. ein derartiges Glied einer Energieführungskette.

Um eine Energieführungskette mit Kabeln, Leitungen oder dergleichen zu bestücken oder diese der Energieführungskette zu entnehmen, sind die Glieder der Energieführungskette zu öffnen, indem der die Seitenteile verbindende Quersteg lageverändert oder demontiert wird. Die Möglichkeit einer schnellen Montage und Demontage des Quersteges ist daher oftmals erwünscht, um den Zeitaufwand zum Öffnen und Schließen einer Energieführungskette und somit beispielsweise Umrüstzeit bei der Bestückung oder Wartung einer Energieführungskette einzusparen. Ferner muss der Quersteg einer Energieführungskette sicher an den Seitenteilen festgelegt sein, da bei der Verfahrung der Energieführungskette auf den Quersteg hohe Kräfte einwirken, beispielsweise auch wenn in der Kette geführte Leitungen an den Quersteg drücken.

Oftmals wird der Quersteg mittels einer Rastverbindung an den Seitenteilen festgelegt, was jedoch den Nachteil hat, dass der Quersteg dann nicht einfach und schnell an dem Seitenteil montierbar bzw. demontierbar ist. Da die Rastverbindung eine sichere Festlegung des Quersteges an dem Seitenteil bewirken muss, ist diese zumeist nicht einfach und schnell lösbar, vielmehr ist hierzu oftmals ein relativ hoher Kraftaufwand aufzubringen und gegebenenfalls auch der Einsatz von Werkzeugen erforderlich.

Es ist daher auch bereits bekannt, Querstege mit einem Verriegelungselement zu versehen, mittels welchem der Quersteg an dem Seitenteil des Kettengliedes verriegelbar und so an dem Seitenteil sicher gehaltert ist. Ein solcher Quersteg mit Verriegelungselement ist beispielsweise in der WO 2008/125084 beschrieben. Nachteilig bei diesem Quersteg ist jedoch, dass zur Entriegelung des Verriegelungselementes ein Werkzeug verwendet werden muss. Ferner ist die Kniehebelkonstruktion des Verriegelungselementes mit Betätigungsteil und Verriegelungsteil in der Herstellung relativ aufwändig und die vorgesehenen Scharniere in Form von Filmanbindungen sind gegenüber mechanischen Beschädigungen vergleichsweise empfindlich.

Ein gattungsgemäßer Quersteg ist der JP 2000/145897 A zu entnehmen. Der Haltebereich des Verriegelungselementes ist klauenförmig ausgebildet. Das Verriegelungselement ist durch eine Zapfen-Loch-Verbindung an aufspreizbaren Vorsprüngen des Quersteges befestigt.

Der Erfindung liegt daher die Aufgabe zu Grunde, einen Quersteg mit Verriegelungselement bereitzustellen, wobei der Quersteg schnell und einfach an dem Seitenteil des Kettengliedes montierbar und demontierbar ist und wobei der Verriegelungsmechanismus des Quersteges robust ausgebildet ist, so dass der Quersteg besonders sicher an dem Seitenteil festlegbar ist.

Diese Aufgabe wird durch einen Quersteg nach Anspruch 1 gelöst, bei welchem der Haltebereich des Quersteges für das Verriegelungselement eine bogenförmige Führung aufweist, welche bei Betätigung des Verriegelungselementes eine Schwenkbewegung desselben zumindest über einen Teil oder die vollständige Bewegung des Verriegelungselementes zwischen dessen Verriegelungsstellung und Entriegelungsstellung bewirkt. Ferner wird die Aufgabe durch ein Seitenteil gemäß Anspruch 12 und durch ein Kettenglied gemäß Anspruch 14 gelöst.

Erfindungsgemäß weist der Haltebereich des Quersteges für das Verriegelungselement eine bogenförmige Führung auf, welche bei Betätigung des Verriegelungselementes eine Schwenkbewegung desselben zumindest über einen Teil oder die vollständige Bewegung des Verriegelungselementes zwischen dessen Verriegelungsstellung und Entriegelungsstellung bewirkt. Durch die bogenförmige Führung erfolgt somit eine definierte Führung des Verriegelungselementes bei dessen Überführung von der Verriegelungsstellung in die Entriegelungsstellung und umgekehrt. Die bogenförmige Führung ist vorzugsweise eine kreisbogenförmige Führung. Die bogenförmige Führung kann zugleich als Halterung für das Verriegelungselement an dem Quersteg ausgebildet sein, so dass weitere Halterungsmittel für das Verriegelungselement entbehrlich sind, auch wenn diese gegebenenfalls zusätzlich vorgesehen sein können. Die bogenförmige Führung kann insbesondere als Führungskanal ausgebildet, in welchem der Verriegelungsabschnitt des Verriegelungselementes geführt ist. Der Führungskanal kann neben den beiden Führungsflächen gegenüberliegende Seitenwände aufweisen, so dass der Kanal zumindest abschnittsweise oder über seine gesamte Länge umfänglich geschlossen ist, was eine besonders exakte Führung des Verriegelungselementes ermöglicht. Ferner ist hierdurch eine besonders robuste Ausgestaltung des Verriegelungsmechanismus gegeben, da die Führung aus dem Material des Quersteges herausgearbeitet sein kann und somit beispielsweise eine mechanische Schwenkachse, welche leichter mechanischen Beschädigungen unterliegt, entbehrlich ist.

Dadurch, dass das Verriegelungselement als Schwenkteil ausgebildet ist und bei Betätigung desselben der Verriegelungsabschnitt zumindest über einen Teil seiner Bewegung in einer Schwenkbewegung bewegt wird, ist das Verriegelungselement besonders einfach handhabbar, also schnell und zuverlässig zu betätigen, um dieses wahlweise in seine Verriegelungs- oder Entriegelungsstellung zu überführen. Ferner ist das Verriegelungselement hierdurch besonders einfach und stabil aufgebaut, da dieses nicht aus mehreren durch Scharniere miteinander verbundenen Teilen besteht. Das Verriegelungselement ist somit in der Handhabung auch besonders zuverlässig. Ferner ist auch dadurch eine schnelle Montage bzw. Demontage des Quersteges unter Verriegelung bzw. Entriegelung des Verriegelungselementes möglich, da beim Ansetzen des Quersteges an dem mit diesem zu verbindenden Seitenteil der Quersteg von seiner Oberseite, also der dem Inneren der Energieführungseinrichtung abgewandten Seite, gehandhabt wird und somit das Verriegelungselement besonders einfach zugänglich ist. Es versteht sich, dass der Quersteg ein entsprechendes Lager oder eine Führung für das Verriegelungselement aufweist, so dass dieses eine definierte Schwenkbewegung vollführt. Vorzugsweise ist die Bewegung des Verriegelungselementes von seiner Entriegelungsstellung in seine Verriegelungsstellung oder umgekehrt eine reine Schwenkbewegung, besonders bevorzugt um eine vordefinierte Verschwenkachse. Die Verschwenkachse kann insbesondere jedoch auch virtuell gegeben sein, was bevorzugt ist, nämlich beispielsweise durch eine entsprechende bogenförmige Führung des Verriegelungsabschnittes bei dessen Schwenkbewegung, wobei die Bogenkrümmung der Führung eine Verschwenkachse definiert. Gegebenenfalls kann die Bewegung des Verriegelungselementes aus seiner Entriegelungsstellung in seine Verriegelungsstellung oder umgekehrt auch einen gewissen Anteil einer translativen Bewegung haben, beispielsweise einer Verschiebung in Quersteglängsrichtung, was jedoch nicht notwendig ist und bevorzugt nicht gegeben ist. Durch die Verschwenkung des Verriegelungsabschnittes kann ferner ein Teilbereich, insbesondere ein Endbereich des Verriegelungsabschnittes an dessen freien Ende mit dem Seitenteilhaltebereich für den Quersteg in Angriff gebracht werden. Dieser Seitenteilhaltebereich ist vorzugsweise als Ausnehmung oder gegebenenfalls als Vorsprung ausgebildet, welche/r an dem Seitenteil bzw. der dem Ketteninneren zugewandten großflächigen Seitenfläche desselben, einschließlich einem an der Seite großflächigen Seitenfläche des Seitenteils nach innen vorstehenden Vorsprung, vorgesehen ist, wobei der Verriegelungsabschnitt in die besagte Ausnehmung des Seitenteilhaltebereichs eingreift oder den Vorsprung untergreift. Hierdurch wird der Quersteg gegen Entfernung von der Seitenlasche in einer Richtung senkrecht zu der jeweiligen oberen oder unteren Schmalfläche des Seitenteils, an welcher der Haltebereich angeordnet ist, gesichert. Wird der Verriegelungsabschnitt erfindungsgemäß in einer Schwenkbewegung geführt, um in diese Ausnehmung eingreifen bzw. den Vorsprung untergreifen zu können, so kann in der Verriegelungsstellung der Endbereich des Verriegelungsabschnittes an der die Ausnehmung bzw. dem Vorsprung definierenden Wandung anliegen. Der Vorsprung kann hierbei jeweils als der der Schmalseite der Seitenlasche zugewandte Wandungsbereich einer (hypothetischen bzw. alternativ vorsehbaren) Ausnehmung angesehen werden. Hierdurch wird zum einen ein sicherer Sitz des Quersteges bereitgestellt. Andererseits kommt bei der Verschwenkbewegung des Verriegelungsabschnittes in seinen Verriegelungsstellung dieser erst in seiner Endstellung mit der Wandung der Ausnehmung zum Angriff, wodurch eine Reibung zwischen Verriegelungsabschnitt und Ausnehmungswandung bei der Bewegung des Verriegelungsabschnittes in seine Verriegelungsstellung vermieden wird, wie diese ansonsten bei einer linearen Verschiebung des Verriegelungsabschnittes in die Ausnehmung hinein vorliegen würde, wie dies beispielsweise nach der WO 2008/125084 gegeben ist. Hierbei ist zu berücksichtigen, dass nach der WO 2008/125084 bevorzugt im Rahmen der Erfindung der Quersteg allein durch den Verriegelungsabschnitt des Verriegelungselementes in Bezug auf eine Beabstandung des Quersteges senkrecht zu der Oberseite des Quersteges gesichert wird. Als Querstegoberseite sei hierbei jeweils die dem Ketteninneren abgewandte Seite des Quersteges verstanden. Der Quersteghaltebereich des Seitenteils kann jeweils als von der Seitenteilinnenseite in das Ketteninnere vorstehendes Horn, welches die besagte Aufnahme bzw. Vorsprung zur verriegelnden Ankoppelung des Verriegelungselementes umfasst, ausgebildet sein. Der Quersteghaltebereich kann auch teilweise oder gegebenenfalls vollständig in den Korpus des Seitenteils eingearbeitet sein.

Vorzugsweise weist die bogenförmige Führung des QuerstegHaltebereichs für das Verriegelungselement eine der Querstegoberseite zugewandte obere bogenförmige Führungsfläche und eine der Querstegoberseite abgewandte untere bogenförmige Führungsfläche jeweils zur Führung des Verriegelungselementes in seiner Schwenkbewegung auf. Die beiden bogenförmigen Führungsflächen sind jeweils vorzugsweise als kreisbogenförmige Führungsflächen ausgebildet. Die beiden genannten bogenförmigen Führungsflächen weisen vorzugsweise denselben Kreismittelpunkt auf. Durch die obere und untere bogenförmige Führungsfläche wird somit ein Führungskanal für den Verriegelungsabschnitt des Verriegelungselementes bereitgestellt, so dass eine exakte Führung des Verriegelungsabschnittes in dem durch die beiden bogenförmigen Führungsflächen ausgebildeten Führungskanal gegeben ist.

Bevorzugt ist der Verriegelungsabschnitt des Verriegelungselementes bogenförmig ausgebildet, besonders bevorzugt kreisbogenförmig, wobei der Verriegelungsabschnitt an der zumindest einen oder beiden bogenförmigen Führungsflächen bzw. in dem bogenförmigen Führungskanal geführt ist. Die Bogenkrümmung des Verriegelungsabschnittes entspricht vorzugsweise der Krümmung der oben bzw. unteren Führungsfläche, in Bezug auf die jeweils miteinander kooperierenden Flächen der Führung und des Verriegelungsabschnittes.

Durch die bogenförmige Ausführung des Verriegelungsabschnittes kann dieser exakt und zumindest nahezu spielfrei oder spielfrei in der bogenförmigen Führung geführt werden. Hierdurch wird eine exakt definierte Lageveränderung des Verriegelungsabschnittes bei seiner Lageveränderung von der Entriegelungsstellung in die Verriegelungsstellung oder umgekehrt gewährleistet und damit auch eine präzise und schnelle Handhabung des Verriegelungselementes. Vorzugsweise weist der Verriegelungsabschnitt jeweils zumindest einen Anlagebereich an der oberen oder der unteren oder bevorzugt an der oberen und der unteren bogenförmigen Führung für den Verriegelungsabschnitt auf, so dass das Verriegelungselement vermittels des Verriegelungsabschnittes exakt bei der Verschwenkbewegung des Verriegelungselementes geführt wird. Dieser Anlagebereich des Verriegelungsabschnittes kann flächig an der jeweiligen Führungsfläche des Haltebereichs für das Verriegelungselement anliegen, gegebenenfalls kann dies aber auch lediglich ein Vorsprung sein, welcher auch eine Zusatzfunktion aufweisen kann (was aber nicht zwingend ist) wie beispielsweise das Verriegelungselement in einer definierten Stellung rastend festzulegen, in Zusammenwirkung mit einem anderen Bereich des Führungskanals als Verliersicherung dient oder auch eine andere Funktion hat. Durch die Auflage eines Vorsprungs an der bogenförmigen Führungsfläche zur Führung des Verriegelungsabschnittes wird ferner aufgrund der geringen Anlagefläche die Reibung bei der Verschwenkung des Verriegelungselementes vermindert, wodurch dieses leicht betätigbar ist.

Allgemein bevorzugt ist somit der Verriegelungsabschnitt des Verriegelungselementes in der bogenförmigen Führung des Quersteghaltebereichs für das Verriegelungselement geführt, so dass dieses bei der Betätigung eine exakte Schwenkbewegung durchführen kann.

Vorzugsweise ragt der Betätigungsbereich des Verriegelungselementes von dem Verriegelungsabschnitt desselben seitlich ab. Hierdurch kann das Verriegelungselement insgesamt flach ausgebildet sein und der Betätigungsbereich desselben kann vollständig in dem Querschnitt des Quersteges integriert sein, so dass der Betätigungsabschnitt in der Verriegelungsstellung des Verriegelungselementes nicht oberseitig an dem Quersteg hinausragt. Besonders bevorzugt ragt das Betätigungselement in einem Winkel von ca. 120° von dem bogenförmigen Bereich des Verriegelungsabschnittes ab oder in einem Bereich von 100°-140°.

Vorzugsweise ist das Verriegelungselement als im Wesentlichen starres Bauteil ausgebildet. Materialschwächungsbereiche wie beispielsweise Filmscharniere oder zueinander lageveränderliche Bereiche des Verriegelungselementes wie nach der WO 2008/125084 liegen somit nicht vor. Hierdurch ist eine robuste Ausführung des Verriegelungselementes gegeben, so dass dieses schnell und sicher betätigbar ist. Zum anderen kann hierdurch das Verriegelungselement in seiner Verriegelungsstellung mit einer gewissen Vorspannung an dem Quersteghaltebereich des Seitenteils anliegen, wodurch ein sicherer und spielfreier Sitz des Quersteges bei verriegeltem Verriegelungselement gewährleistet ist. An sich ist es allgemein im Rahmen der Erfindung bereits ausreichend, wenn das Verriegelungselement in seiner Verriegelungsstellung lose an dem Quersteghaltebereich des Seitenteils anliegt. Dies hat jedoch den Nachteil, dass bei gegebenen Toleranzen oder geringfügigen Lageveränderungen des Verriegelungselementes beim Betrieb der Energieführungskette sich ein Spiel zwischen Verriegelungselement und Quersteghaltebereich ausbilden könnte, mit der Gefahr einer Vergrößerung des Spiels beim Betrieb der Kette. Dem wird durch die Anlage des Verriegelungselementes mit einer gewissen Vorspannung an dem Quersteghaltebereich in der Verriegelungsstellung entgegengetreten.

Vorzugsweise weist der Verriegelungsabschnitt des Verriegelungselementes an seinem Randbereich eine ebene Anlagefläche zur Anlage an dem Quersteghaltebereich des Seitenteils auf.

Der bogenförmige Bereich des Verriegelungsabschnittes kann somit mit einer ebenen Anlagefläche ausgebildet sein. Vorzugsweise ist allgemein im Rahmen der Erfindung der Verriegelungsabschnitt an seinem Kontaktbereich mit dem Quersteghaltebereich flächig ausgebildet unter Bereitstellung einer flächigen Anlage mit dem Quersteghaltebereich in der Verriegelungsstellung des Verriegelungselementes. Hiermit ist ein sicherer Sitz des Quersteges gegeben. Vorzugsweise erstreckt sich die Anlagefläche des Verriegelungsabschnittes an dem Quersteghaltebereich über einen größeren Teil der Breite des Verriegelungselementes, besonders bevorzugt über dessen gesamte Breite, so dass hierdurch der Quersteg in Bezug auf eine mögliche Verkippung um die Quersteglängsachse gesichert ist.

Vorzugsweise weisen das Verriegelungselement und der Haltebereich des Quersteges für das Verriegelungselement korrespondierende Rastmittel zur Festlegung des Verriegelungselementes in seiner Verriegelungsstellung auf. Hierdurch wird ein Lösen des Verriegelungselementes aus seiner Verriegelungsstellung beim Betrieb der Energieführungskette, welcher mit entsprechenden mechanischen Krafteinwirkungen auf die Kettenglieder verbunden ist, gesichert. Die Rastmittel von Verriegelungselement und Quersteghaltebereich sind besonders bevorzugt an dem Verriegelungsabschnitt des Verriegelungselementes angeordnet. Dies kann sich hierbei insbesondere auch auf den Teilabschnitt des Verriegelungsabschnittes beziehen, welcher in der Verriegelung des Verriegelungselementes noch im Quersteg angeordnet ist. Gegebenenfalls können die korrespondierenden Rastmittel somit in dem Quersteghaltebereich des Seitenteils angeordnet sein. Besonders bevorzugt sind die korrespondierenden Rastmittel am Endbereich des Quersteges angeordnet, besonders bevorzugt am innerhalb oder am Endbereich der Führung des Quersteges für den Verriegelungsabschnitt. Dies hat sich als bevorzugt herausgestellt, um bei Kraftbeaufschlagung senkrecht auf den Quersteg bei Verfahrungen der Energieführungskette ein unbeabsichtigtes Lösen des Verriegelungselementes zu verhindern. Durch die Anordnung der Rastmittel im Führungskanal der bogenförmigen Führung für das Verriegelungselement sind diese Rastmittel zudem durch äußere Krafteinwirkung geschützt und somit die Gefahr eines unbeabsichtigten Lösens der Rastverbindung vermindert. Ferner wird durch die Anordnung der Rastmittel an dem Verriegelungsabschnitt bzw. in einer Anordnung mit möglichst großer Entfernung von dem Betätigungsabschnitt des Verriegelungselementes die Sicherheit der Rastverbindung verbessert, da diese dann nahe an dem Verbindungsbereich zwischen Quersteg und Seitenteil angeordnet ist und hierdurch geringere Hebelkräfte auf den zwischen dem freien Ende und den Rastmitteln angeordneten Bereich des Verriegelungsabschnittes wirken, als wenn die Rastmittel beispielsweise am Betätigungsbereich des Verriegelungselementes angeordnet werden.

Vorzugsweise weist der Haltebereich des Quersteges mit dem Verriegelungselement zusammenwirkende Verliersicherungsmittel auf, welche vorzugsweise im Führungskanal der bogenförmigen Führung für das Verriegelungselement, genauer gesagt für den Verriegelungsabschnitt desselben, angeordnet sind. Hierdurch wird verhindert, dass bei Anordnung des Verriegelungselementes in seiner Entriegelungsstellung dieses sich unbeabsichtigt von dem Quersteg lösen kann. Die Handhabung des Quersteges bei dessen Montage oder die Montage wird hierdurch wesentlich verbessert. Dadurch, dass die Verliersicherungsmittel Sicherungsmittel an dem Verriegelungsabschnitt des Verriegelungselementes angeordnet sind, können diese erst zusammenwirken, wenn das Verriegelungselement sich in seiner Entriegelungsstellung befindet. Hiermit ist somit eine einfache und reibungsarme Betätigung des Verriegelungselementes möglich. Zudem wird durch die Anordnung der Verliersicherungsmittel in dem Führungskanal für das Verriegelungselement bzw. den Verriegelungsabschnitt desselben eine Beschädigung oder Entkoppelung derselben durch äußere Krafteinwirkung verhindert, die Verliersicherungsmittel sind somit auch in der Entriegelungsstellung des Verriegelungselementes geschützt angeordnet. Die Verliersicherungsmittel an dem Haltebereich des Quersteges bzw. dem Verriegelungselement oder Verriegelungsabschnitt desselben können beispielsweise als einander hintergreifende Vorsprünge ausgebildet sein. Das Verliersicherungsmittel bzw. der entsprechende Vorsprung an dem Verriegelungselement bzw. Verriegelungsabschnitt desselben kann vorzugsweise an einer Fläche des Quersteghaltebereiches für das Verriegelungselement anliegen, so dass hierdurch der Sitz des Verriegelungselementes bei dessen Schwenkbewegung verbessert wird und dieses zumindest im Wesentlichen oder praktisch spielfrei in der Führung verfahren werden kann. Es versteht sich allgemein, dass jedoch auch andere Vorsprünge, Anlagebereiche oder dergleichen an dem Verriegelungsabschnitt vorgesehen sein können, welcher an einer Führungsfläche des Quersteghaltebereichs für das Verriegelungselement anliegen kann, um so einen spielfreien Lauf des Verriegelungselementes bzw. -abschnittes bei dessen Schwenkbewegung zu gewährleisten.

Besonders bevorzugt ist das Verriegelungselement durch manuelle Betätigung verriegelbar und entriegelbar. Die erfindungsgemäße Konstruktion des Verriegelungselementes ist hierfür besonders angepasst. So kann der freie Endbereich des Betätigungsabschnittes des Verriegelungselementes leicht manuell ergriffen werden, um das Verriegelungselement betätigen zu können. An dem Quersteg kann hierzu leicht ein Fingereingriffsbereich vorgesehen sein. Da das Betätigungsende des Verriegelungselementes der Querstegmitte zugewandt ist, besteht bei der erfindungsgemäßen Ausgestaltung ausreichend Platz, um einen entsprechenden Fingereingriffsbereich für den Betätigungsabschnitt an dem Quersteg anzuordnen.

Ferner von der Erfindung umfasst ist ein Seitenteil eines Kettenliedes einer Energieführungskette mit einem Halteabschnitt zur lösbaren Festlegung eines Quersteges, und mit einem erfindungsgemäßen Quersteg, wobei das Seitenteil lateral beabstandete großflächige Seitenflächen und die Seitenflächen verbindende obere und untere Schmalseiten, welche in Kettenlängsrichtung verlaufen, aufweist, wobei der Halteabschnitt für den Quersteg eine in Richtung einer Seitenfläche geöffnete Aussparung zur Aufnahme eines Verriegelungselementes eines Quersteges zur verriegelten Festlegung des Quersteges an dem Seitenteil aufweist, um den Quersteg gegen eine Beabstandung von der Seitenlasche in einer Richtung quer zur Längsrichtung des Quersteges zu sichern. Das Seitenteil kann hierbei auch ein Seitenteil mit angekoppeltem Quersteg sein. Der Quersteg kann hierbei besonders bevorzugt erfindungsgemäß ausgebildet sein, aber auch eine andere Ausgestaltung aufweisen.

Es versteht sich, dass das Seitenteil jeweils in Seitenteillängsrichtung voneinander beabstandete Gelenkbereiche zur Verbindung mit einem entsprechenden benachbarten Seitenteil mit dessen jeweiligen Gelenkbereich aufweist. Die Erfindung ist jedoch nicht auf bestimmte Formen von Seitenteilen oder Ausbildungen von Gelenkverbindungen beschränkt. Die Seitenteile können als alternierend angeordnete Innen- und Außenlaschen, als gekröpfte Seitenlaschen oder als seitlich aneinanderstoßende Seitenlaschen oder auf andere Weise ausgebildet sein. Die Gelenkbereiche können als Zapfen-Ausnehmungs-Gelenke oder Stift-Loch-Gelenke ausgebildet sein, aber auch als elastisch oder unter Torsion deformierbare Gelenkelemente, welche benachbarten Seitenteile verbinden, wobei benachbarte Seitenteile einander überkönnen aber gegebenenfalls auch nicht. Durch die Gelenkbereiche der Seitenteile kann die Kette in Art eines Obertrums, eines Umlenkbereichs und eines Unterrums angeordnet werden, wobei die derart angeordnete Kette geradlinig, gekrümmt oder in anderer Weise angeordnet sein kann.

Erfindungsgemäß ist der Halteabschnitt des Seitenteils für den Quersteg derart ausgebildet, dass der Quersteg aus Richtung senkrecht zu der in Kettenlängsrichtung verlaufenden Schmalseite des Seitenteils, im Bereich bzw. an welcher der Halteabschnitt angeordnet ist, bis zum Erreichen der Querstegsollposition, in welcher der Quersteg mit dem Seitenteil mit einem Verriegelungselement verriegelbar ist, lose in den Halteabschnitt des Seitenteils für den Quersteg einsetzbar ist. Das Verriegelungselement kann am Quersteg lageveränderlich gehaltert sein. Der Quersteg kann somit senkrecht zur Seitenteilschmalseite, welche mit dem Quersteghalteabschnitt versehen ist, vorzugsweise in einer Richtung von außerhalb des Kettengliedes in Richtung zum Kettenglied hin, lose in den Haltebereich eingesetzt werden, und zwar bis zum Erreichen der Sollposition des Quersteges, um diesen mit dem Seitenteil verriegeln zu können. Der Quersteg ist hierbei erfindungsgemäß ausgebildet.

Vorzugsweise gilt dies für beide Seitenteile eines jeweiligen Kettengliedes und für beide Querstegenden des jeweiligen Quersteges. Der Quersteg kann hierdurch auf einfache Weise von außen senkrecht zu den in Kettenlängsrichtung verlaufenden Schmalseiten an die Seitenteile herangeführt werden, wobei der Quersteg parallel zu der Verbindungslinie der einander gegenüberliegenden Haltebereiche der beiden Seitenteile, welche durch einen Quersteg zu verbinden sind, herangeführt wird. Dadurch, dass der Quersteg lose in seine Sollposition eingesetzt wird, ist somit ein zusätzlicher Kraftaufwand wie dieser bei Überwindung einer Rastverbindung oder dergleichen notwendig wäre, nicht gegeben. Ferner kann der Quersteg also parallel zu seiner Sollposition in seiner Verbindungsstellung der beiden Seitenteile an diese herangeführt werden, so dass eine besonders einfache Handhabung des Quersteges gegeben ist, um diesen besonders schnell und einfach montieren oder demontieren zu können. Es ist somit nicht erforderlich, den Quersteg zunächst in einem der Haltebereiche einer der beiden Seitenteile festzulegen und dann beispielsweise in Art einer Verschwenkbewegung den anderen Haltebereich des Quersteges mit dem entsprechendem Haltebereich des Seitenteils in Verbindung zu bringen. Bei der erfindungsgemäßen Ausbildung der Seitenteile ist somit die Handhabung des Quersteges, um diesen an den beiden Seitenteilen verriegeln zu können, wesentlich schneller durchführbar. Insbesondere können somit beide Haltebereiche des Quersteges zeitgleich mit den Haltebereichen der einander gegenüberliegenden Seitenteile eines Kettengliedes angekoppelt werden, was in der Handhabung besonders vorteilhaft ist.

Besonders bevorzugt kann das Seitenteil gemäß Anspruch 13 ausgebildet sein, wonach der Haltebereich für den Quersteg zwei seitliche Aussparungen aufweist, welche jeweils zweiseitig offen sind, nämlich einerseits zur Schmalseite des Seitenteils hin, an welcher der Haltebereich angeordnet ist. Diese Schmalseite ist eine in Kettenlängsrichtung verlaufende Schmalseite. Bei auf einer ebenen Unterlage angeordneten Energieführungskette bei Betrachtung des oberen Quersteges ist somit die entsprechende Ausnehmung nach oben hin geöffnet. In diese kann somit ein entsprechender Abschnitt des Haltebereichs des Quersteges wie ein zapfenförmiger Vorsprung eingesetzt werden. Andererseits sind die Aussparungen in Kettenlängsrichtung offen, so dass also insgesamt der Quersteg an seinem Endbereich gabelförmig mit zwei hakenförmigen Vorsprüngen ausgestattet sein kann, wobei die freien Enden der beiden Haken in Richtung zur Querstegmittellängsachse ausgerichtet sind. Die Aussparungen weisen ferner einen Bodenbereich auf, welcher die Einsetztiefe der hakenförmigen Vorsprünge des Quersteges begrenzt. Ferner bildet die jeweilige Aussparung eine Hinterschneidung des Quersteghalterabschnittes aus, welche bei Anordnung eines Bereiches des Halteelementes des Quersteges eine Beabstandung des Quersteges von dem Seitenteil in Quersteglängsrichtung verhindert.

Die beiden Ausnehmungen sind somit im Wesentlichen jeweils in Art eines Schachtes ausgebildet, welcher in Bezug auf die angrenzende Schmalseite nach oben hin geöffnet ist und welcher zudem in Kettenlängsrichtung geöffnet ist, so dass hier von oben ein gabelförmiger Haltebereich des Quersteges mit zur Querstegmittelachse den vorspringenden Vorsprüngen von oben in die schachtförmigen Ausnehmungen eingesetzt werden kann. Diese Ausgestaltung hat sich für eine sichere und schnell handzuhabende Verbindung zwischen Quersteg und Seitenteilen besonders bevorzugt. Weiterhin betrifft die Erfindung ein Kettenglied einer Energieführungskette mit einem erfindungsgemäßen Quersteg nach Anspruch 14 bzw. nach Anspruch 15.

Die Aufnahme des Quersteghaltebereichs des Seitenteils zur Aufnahme des Verriegelungselementes des Quersteges ist hierbei bevorzugt in Bezug auf die Längserstreckung des Seitenteils zwischen den beiden genannten zweiseitig offenen Ausnehmungen des Haltebereichs für den Quersteg angeordnet. Es versteht sich, dass anstelle einer Ausnehmung auch ein Vorsprung an dem Seitenteil gegeben sein kann, welcher von dem Verriegelungselement des Quersteges untergriffen wird, um den Quersteg an dem Seitenteil zu sichern.

Sämtliche Ausführungen in Bezug auf einen erfindungsgemäßen Quersteg können sich auch auf die Kombination des Quersteges mit einem Seitenteil bzw. des Quersteges an einem Kettenglied beziehen. Sämtliche Ausführungen in Bezug auf ein erfindungsgemäßes Seitenteil können sich auch auf die Kombination des Seitenteils mit einem erfindungsgemäßen Quersteg oder einen Quersteg anderer Bauart beziehen. Vorzugsweise weist das Kettenglied jeweils zwei lateral voneinander beabstandete Seitenteile auf, welche durch zwei Querstege miteinander verbunden sind. Hierbei können einer, besonders bevorzugt beide der Querstege des Kettengliedes als erfindungsgemäß ausgebildete Querstege ausgebildet sein. Die erfindungsgemäße Ausgestaltung des Seitenteils kann sich besonders bevorzugt jeweils auf beide Seitenteile eines Kettengliedes beziehen.

Ferner betrifft die Erfindung eine Energieführungskette nach Anspruch 16 und ein Verfahren Verfahren zur Befestigung eines Seitenteils eines Kettengliedes einer Energieführungskette mit einem erfindungsgemäßen Quersteg nach Anspruch 17.

Die Erfindung sei nachfolgend anhand eines Ausführungsbeispiels beschrieben. Sämtliche Merkmale des Ausführungsbeispiels seien hierbei auch unabhängig voneinander und allgemein im Rahmen der Erfindung offenbart. Gleiche Bauteile sind in den Figuren mit gleichen Bezugsziffern versehen. Es zeigen:
- Figur 1:: eine perspektivische Darstellung von zwei unvollständigen Kettengliedern einer Energieführungskette, bei welchen die zweiten Seitenteile fehlen, wobei die Querstege und die Seitenteile erfindungsgemäß ausgebildet sind,
- Figur 2:: eine perspektivische Darstellung eines erfindungsgemäßen Querstegs mit einerseits verriegeltem und andererseits entriegeltem Verriegelungselement,
- Figur 3:: eine Querschnittsdarstellung des Quersteges gemäß Figur 2 (Figur 3a) und eine Detailansicht des Quersteges gemäß Figur 3a (Figur 3b),
- Figur 4:: eine Draufsicht auf den Quersteg gemäß Figur 2 mit einerseits verriegeltem Verriegelungselement (links) und entriegeltem Verriegelungselement (rechts),
- Figur 5:: Verbindungsbereich eines erfindungsgemäßen Quersteges mit erfindungsgemäßem Seitenteil bei verriegeltem Quersteg,
- Figur 6:: eine perspektivische Ansicht eines erfindungsgemäßen Seitenteils gemäß Figur 1.

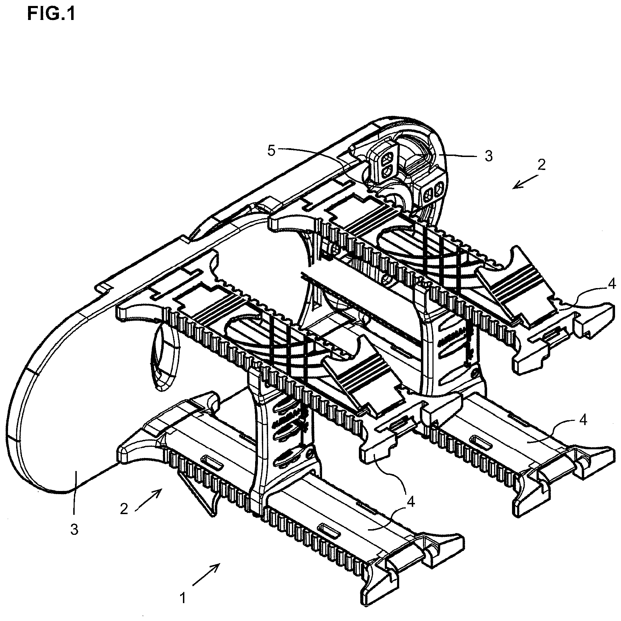

Figur 1 zeigt eine perspektivische Darstellung von zwei unvollständigen Kettengliedern 2 einer Energieführungskette 1, bei welchen die zweiten Seitenteile 3 eines jeden Kettengliedes, also in der Darstellung die vorderen Seitenteile, welche mit den freien Enden der Querstege 4 zu verbinden wären, fehlen. Die Querstege 4 und die Seitenteile 3 sind hier erfindungsgemäß ausgebildet sind. Die Seitenteile der Kette sind hier nach Fig. 1 als alternierende Innen und Au-ßenteile ausgeführt. Es sei betont, dass die Erfindung auch bezüglich der Seitenteile und die Ankoppelung der Querstege an den Seitenteilen nicht auf diese Gestalt der Seitenteile beschränkt ist, wie auch in den allgemeinen Ausführungen zu der Erfindung schon angemerkt. Die Seitenteile 3 weisen Gelenkbereiche 5 auf, um mit den jeweils beiden benachbarten Seitenlaschen eines Stranges von Seitenlaschen gelenkig verbunden werden zu können, wie in Fig. 1 bespielhaft angedeutet, so dass die Energieführungskette in einer Anordnung mit Obertrum, Umlenkbereich und Untertrum anordenbar ist. Die Ausgestaltung der Gelenkverbindungen ist jedoch in keiner Weise beschränkend für die Erfindung, die Gelenkverbindungen können bspw. auch ein einem oder beiden benachbarten Seitenteilen einstückig angeformt sein. Die Kettenglieder 2 sind hier sowohl mit einem oberen und einem unteren Quersteg in erfindungsgemäßer Ausgestaltung versehen, es kann aber auch bspw. nur der obere oder nur der untere Quersteg erfindungsgemäß ausgestaltet sein, und der andere Quersteg irgendwie anders, beispielsweise auch an den Seitenlaschen angeformt sein.

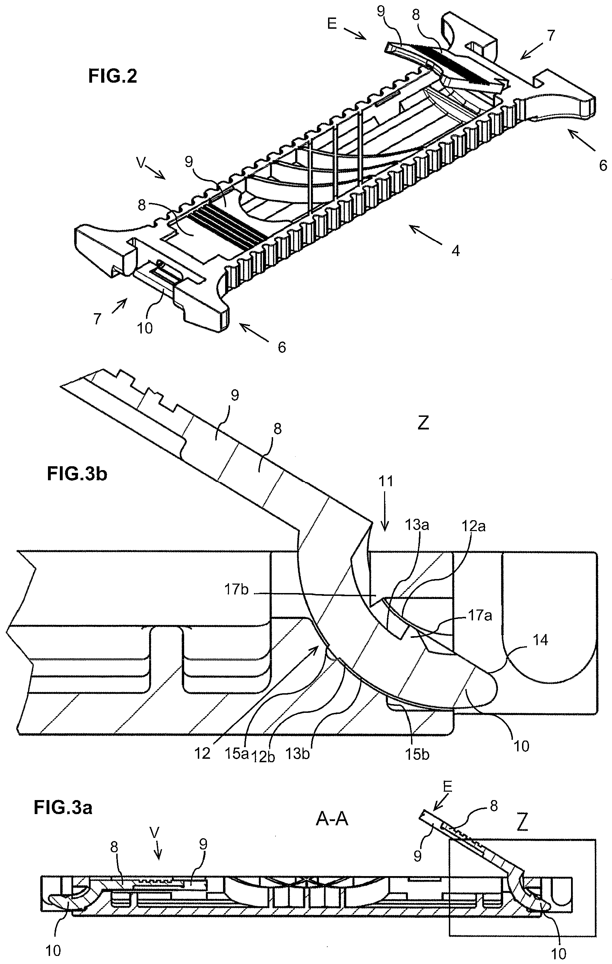

Der Quersteg 4 dient zur lösbaren Verbindung zweier Seitenteile 3 eines Kettengliedes 2 einer Energieführungskette 1, wobei der Quersteg 4 zumindest an einem oder an beiden seiner Enden 6 einen Befestigungsbereich 7 zur lösbaren Festlegung an dem jeweiligen Seitenteil 3 aufweist. Der Befestigungsbereich 7 des Quersteges umfasst ein Verriegelungselement 8 um, welches in eine Verriegelungsstellung V und eine Entriegelungsstellung E überführbar ist (siehe Fig. 2), wobei in der Verriegelungsstellung V der Quersteg 4 unlösbar an dem Seitenteil 3 verriegelt und in der Entriegelungsstellung E der Quersteg 4 von dem Seitenteil 3 lösbar ist. Das Verriegelungselement 8 umfasst einen Betätigungsabschnitt 9 zur wahlweisen Überführung desselben in seine Verriegelungs- oder Entriegelungsstellung, sowie einen Verriegelungsabschnitt 10 zum verriegelnden Angriff mit dem Seitenteil 3 auf. Der Befestigungsbereich 7 des Quersteges ist hier in Art eines Gabelkopfes ausgebildet, mit zwei lateral beabstandeten hakenförmigen Vorsprüngen 7a und einem zwischen diesen angeordnetem Verriegelungselement 8.

Das Verriegelungselement 8 ist als Schwenkteil ausgebildet. Bei Betätigung des Verriegelungselementes 8 wird der Verriegelungsabschnitt 10 zumindest in einem Teil seiner Bewegung von der Verriegelungsstellung V in seine Entriegelungsstellung E oder umgekehrt in einer Schwenkbewegung bewegt.

Der Haltebereich 11 des Quersteges 4 für das Verriegelungselement 8 weist eine bogenförmige Führung 12 auf, welche bei Betätigung des Verriegelungselementes 8 eine Schwenkbewegung desselben zumindest über einen Teil oder die vollständige Bewegung des Verriegelungselementes 8 zwischen dessen Verriegelungsstellung und dessen Entriegelungsstellung bewirkt.

Die bogenförmige Führung 12 des Quersteghaltebereichs für das Verriegelungselement weist eine der Querstegoberseite zugewandte obere bogenförmige Führung 12a und eine der Querstegoberseite abgewandte untere bogenförmige Führung 12b jeweils zur (gemeinsamen) Führung des Verriegelungselementes in einer Schwenkbewegung auf. Die bogenförmigen Führungen 12a, 12b sind hier als kreisbogenförmige Führungen ausgebildet, welche vorzugsweise denselben Kreismittelpunkt haben. Die bogenförmigen Führungen 12a, 12b sind hier als Führungsflächen ausgebildet, ggf. können diese aber auch nur stegförmig oder auf andere Weise ausgebildet sein.

Der Verriegelungsabschnitt 10 des Verriegelungselementes 8 ist bogenförmig ausgebildet. Die obere und/oder untere Begrenzungsfläche 13a, 13b des Verriegelungsabschnittes 10 sind hierbei an die Konturen der oberen und unteren Führungen 12a, 12b angepasst und haben jeweils zumindest im Wesentlichen dieselbe Krümmung wie diese. In Bezug auf die obere Begrenzungsfläche 13a der Verriegelungselementes 8 reicht es aber auch, dass ein Vorsprung wie beispielsweise der als Verliersicherungsmittel 17 fungierende Vorsprung an der oberen Führungsfläche 12a bei der Verschwenkbewegung anliegt, vorzugsweise über die gesamte Verschwenkbewegung, oder geringfügig von dieser beabstandet ist.

Der Verriegelungsabschnitt 10 des Verriegelungselementes 8 ist in der bogenförmigen Führung 12 des Quersteghaltebereichs 11 für das Verriegelungselement 8 angeordnet.

Der Betätigungsbereich 9 des Verriegelungselementes 8 ragt von dem Verriegelungsabschnitt 10 desselben seitlich ab, beispielsweise in einem Winkel von ca. 120°. Der Betätigungsbereich 9 des Verriegelungselementes 8 ist in der Verriegelungsstellung V vollständig in dem Querschnitt des Quersteges 4 aufgenommen (siehe Fig. 2 und 3a).

Das Verriegelungselement 8 ist als im Wesentlichen starres Bauteil ausgebildet.

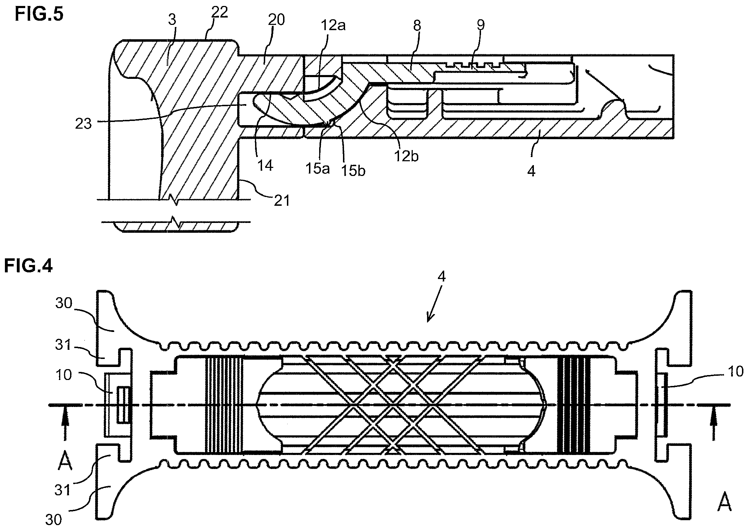

Der Verriegelungsabschnitt 10 des Verriegelungselementes 8 weist an seinem Endbereich eine ebene Anlagefläche 14 zur Anlage an dem Haltebereich des Seitenteils auf (Fig. 3, Fig. 5). Diese kann in der Verriegelungsstellung lose oder bevorzugt mit einer gewissen Vorspannung an dem Haltebereich des Seitenteils anliegen.

Es sind korrespondierende Rastmittel 15 zur Festlegung des Verriegelungselementes in seiner Verriegelungsstellung vorgesehen. Die korrespondierenden Rastmittel 15a sind einerseits an dem Verriegelungselement 8, genauer gesagt an dem Verriegelungsabschnitt 10, vorgesehen. Die zu den Rastmitteln 15a korrespondierenden Rastmittel 15b sind andererseits an dem Quersteghaltebereich 16 des Seitenteils 3 für das Verriegelungselement 8 oder an dem Quersteg 4, vorzugsweise in der bogenförmigen Führung 12 bzw. dem Führungskanal des Quersteges für das Verriegelungselement bzw. für den Verriegelungsabschnitt 10, vorgesehen. Hierdurch ist das Verriegelungselement 8 rastend in seiner Verriegelungsstellung festlegbar.

Der Haltebereich 11 des Quersteges 4 für das Verriegelungselement 8 weist mit dem Verriegelungselement 8 zusammenwirkende Verliersicherungsmittel 17 auf, welche vorzugsweise im Führungskanal der bogenförmigen Führung für das Verriegelungselement angeordnet ist. Die Verliersicherungmittel 17 sind hier als einander hintergreifende Vorsprünge 17a und 17b ausgebildet. Durch die Verliersicherungsmittel 17 wird verhindert, dass das Verriegelungslement insbesondere in der Entriegelungsstellung sich unbeabsichtigt von dem Quersteg löst.

Das Verriegelungselement 8 ist hier durch manuelle Betätigung verriegelbar und entriegelbar.

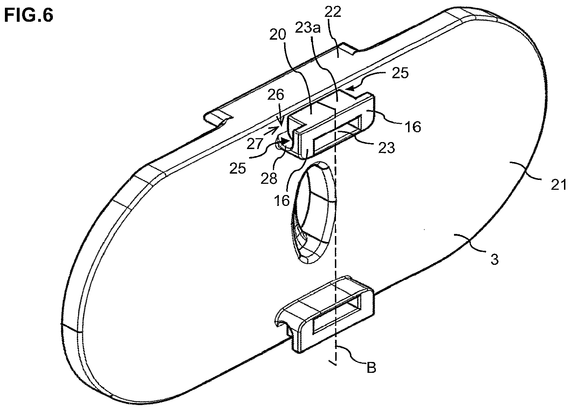

Die Figuren 1 und 6 zeigen ein Seitenteil 3 eines Kettengliedes 2 einer Energieführungskette 1 mit einem Halteabschnitt 20 zur lösbaren Festlegung eines Quersteges 3, sowie in Kombination hiermit auch einen befestigten Quersteg 4. Das Seitenteil 3 weist lateral beabstandete großflächige Seitenflächen 21 und die Seitenflächen 21 verbindende obere und untere Schmalseiten 22, welche in Kettenlängsrichtung verlaufen, auf. Der Halteabschnitt 20 für den Quersteg weist eine in Richtung einer Seitenfläche geöffnete Aussparung 23 zur Aufnahme eines Verriegelungselementes 8 eines Quersteges 3 zur verriegelten Festlegung des Quersteges 4 an dem Seitenteil 3 auf, um den Quersteg gegen eine Beabstandung von der Seitenlasche in einer Richtung quer zur Längsrichtung des Quersteges zu sichern. Anstelle der Ausnehmung kann gegebenenfalls an dem Seitenteil nur der obere Wandbereich 23a, welcher die Aussparung definiert vorgesehen sein. Der Halteabschnitt 20 kann wie dargestellt, als seitlich von den Seitenteilen abragendes Horn ausgebildet sein, so dass auch das Seitenteil relativ dünn und damit gewichtssparend ausgebildet sein kann. Unter Umständen kann der Haltebereich 20 jedoch auch teilweise oder vollständig in dem Seitenteil integriert sein. Die beiden Haltebereiche 20 des Seitenteils sind spiegelsymmetrisch zu der Ebene B.

Der Halteabschnitt 20 des Seitenteils 3 für den Quersteg 4 ist derart ausgebildet, dass der Quersteg aus Richtung senkrecht zu der in Kettenlängsrichtung verlaufenden Schmalseite 22 des Seitenteils, im Bereich welcher der Halteabschnitt angeordnet ist, bis zum Erreichen der Querstegsollposition, in welcher dieser mit dem Seitenteil mit einem Verriegelungselement verriegelbar ist, lose in den Halteabschnitt des Seitenteils für den Quersteg einsetzbar ist. Dem Einsetzen des Befestigungsbereichs 7 des Quersteges in dem Halteabschnitt20 wird somit kein Widerstand entgegensetzt, wie dies bspw. bei einer Rastverbindung mit zu überwindendem Rastwiderstand der Fall wäre.

Der Halteabschnitt 20 für den Quersteg 4 weist zwei seitliche Aussparungen 25 auf, welche jeweils zweiseitig offen sind, nämlich einerseits zur Schmalseite des Seitenteils hin (Bezugsziffer 26), an welcher der Haltebereich angeordnet ist, und andererseits in Kettenlängsrichtung (Bezugsziffer 27). Die Aussparungen 25 sind somit schachtartig ausgebildet, und verlaufen mit der Schachtachse senkrecht zu den Schmalseiten 22 der Seitenteile 3, so dass Befestigungsvorsprünge des Befestigungsbereichs des Quersteges von oben bis zum Erreichen der Sollposition des Quersteges zum Verriegeln mit dem Seitenteil lose in den jeweiligen Schacht eingeführt werden können. Die Aussparungen 25 jeweils zum Kettengliedinneren hin eine Auflagefläche 28 für in die Ausnehmung eingreifende hakenförmigen Haltevorsprünge 30 der Befestigungsbereiche des Quersteges auf, die Auflagefläche wirkt somit als Art Boden. Die jeweilige Aussparung 25 bildet ferner eine Hinterschneidung 28 des Quersteghalteabschnittes aus, welche eine Beabstandung von Seitenteil und Quersteg in Quersteglängsrichtung verhindert. Die seitlich abragenden Vorsprünge 31 der Haltevorsprünge 30 greifen somit in die schachtartigen Ausnehmungen 25 der Seitenteilhaltebereiche 20 ein und sichern dadurch den Quersteg sowohl gegen Beabstandung von den Seitenteilen in Quersteglängsrichtung als auch vor einer Verschiebung in Kettenlängsrichtung.

Diese Ausgestaltung des Halteabschnittes 20 für den Quersteg hat ferner den besonderen Vorteil, dass diese nur vergleichsweise gering in das Ketteninnere hineinragt, trotz Anordnung an der inneren Seitenfläche des Seitenteils, so der Innenraum der Energieführungskette nur relativ wenig durch den Halteabschnitt eingeengt wird, was das Bestücken der Ketten mit Leitungen oder die Entnahme von Leitungen aus der Kette wesentlich erleichtert.

Beide Seitenteile können hierbei in Bezug auf die beiden Haltebereiche eines Quersteges oder in Bezug auf die beiden an gegenüberliegenden Querstegenden beider Querstege eines Kettengliedes gleich ausgebildet sein, insbesondere entsprechend den Ansprüchen 12 und/oder 13 und der zugehörigen Beschreibung.

## Patentansprüche

1. Quersteg (4) zur lösbaren Verbindung zweier Seitenteile (3) eines Kettengliedes (2) einer Energieführungskette (1), wobei der Quersteg (4) zumindest an einem oder an beiden seiner Enden einen Befestigungsbereich (7) zur lösbaren Festlegung an dem jeweiligen Seitenteil (3) aufweist und wobei der Befestigungsbereich (7) des Quersteges (4) ein Verriegelungselement (8) umfasst, welches in eine Verriegelungsstellung und eine Entriegelungsstellung überführbar ist, wobei in der Verriegelungsstellung der Quersteg (4) unlösbar an dem Seitenteil (3) verriegelt und in der Entriegelungsstellung der Quersteg (4) von dem Seitenteil (3) lösbar ist, wobei das Verriegelungselement (8) einen Betätigungsabschnitt (9) zur wahlweisen Überführung desselben in seine Verriegelungs- oder Entriegelungsstellung umfasst, sowie einen Verriegelungsabschnitt (10) zum verriegelnden Angriff mit dem Seitenteil (3) aufweist, wobei das Verriegelungselement (8) als Schwenkteil ausgebildet ist und bei Betätigung des Verriegelungselementes (8) der Verriegelungsabschnitt zumindest in einem Teil seiner Bewegung von der Verriegelungsstellung in seine Entriegelungsstellung oder umgekehrt in einer Schwenkbewegung bewegt wird, **dadurch gekennzeichnet, dass** der Haltebereich (11) des Quersteges (4) für das Verriegelungselement (8) eine bogenförmige Führung (12) aufweist, welche bei Betätigung des Verriegelungselementes (8) eine Schwenkbewegung desselben zumindest über einen Teil oder die vollständige Bewegung des Verriegelungselementes zwischen dessen Verriegelungsstellung und Entriegelungsstellung bewirkt.

2. Quersteg nach Anspruch 1, **dadurch gekennzeichnet, dass** die bogenförmige Führung des Quersteghaltebereichs (11) für das Verriegelungselement (8) eine der Querstegoberseite zugewandte obere bogenförmige Führung (12a) und eine der Querstegoberseite abgewandte untere bogenförmige Führung (12b) jeweils zur Führung des Verriegelungselementes in einer Schwenkbewegung aufweist.

3. Quersteg nach Anspruch 1 oder 2, **dadurch gekennzeichnet, dass** die bogenförmige Führung (12) als Führungskanal ausgebildet ist, in welchem der Verriegelungsabschnitt (10) des Verriegelungselementes (8) geführt ist.

4. Quersteg nach einem Anspruch 3, **dadurch gekennzeichnet, dass** die der Querstegoberseite zugewandte obere bogenförmige Führung (12a) und die der Querstegoberseite abgewandte untere bogenförmige Führung (12b) zwischen sich einen Führungskanal für das Verriegelungselement (8) ausbilden und dass das Verriegelungselement (8) in dem Führungskanal geführt ist.

5. Quersteg nach einem der Ansprüche 1 bis 4, **dadurch gekennzeichnet, dass** der Verriegelungsabschnitt (10) des Verriegelungselementes (8) bogenförmig ausgebildet ist.

6. Quersteg nach einem der Ansprüche 1 bis 5, **dadurch gekennzeichnet, dass** der Verriegelungsabschnitt (10) des Verriegelungselementes (8) in der bogenförmigen Führung des Quersteghaltebereichs (11) für das Verriegelungselement (8) geführt ist.

7. Quersteg nach einem der Ansprüche 1 bis 6, **dadurch gekennzeichnet, dass** der Betätigungsbereich (9) des Verriegelungselementes (8) von dem Verriegelungsabschnitt (10) desselben seitlich abragt.

8. Quersteg nach einem der Ansprüche 1 bis 7, **dadurch gekennzeichnet, dass**
(i) das Verriegelungselement (8) als im Wesentlichen starres Bauteil ausgebildet ist,
und/oder
(ii) dass der Verriegelungsabschnitt (10) des Verriegelungselementes (8) an seinem Endbereich eine ebene Anlagefläche (14) zur Anlage an dem Haltebereich (11) des Seitenteils (3) aufweist.

9. Quersteg nach einem der Ansprüche 1 bis 8, **dadurch gekennzeichnet, dass** einerseits das Verriegelungselement (8) und andererseits der Quersteghaltebereich (11) des Seitenteils (3) für das Verriegelungselement (8) oder der Quersteg (4) korrespondierende Rastmittel (15) zur Festlegung des Verriegelungselementes (8) in seiner Verriegelungsstellung aufweist.

10. Quersteg nach Anspruch 9, **dadurch gekennzeichnet, dass** die Rastmittel (15) im Führungskanal der bogenförmigen Führung für das Verriegelungselement (8) angeordnet sind.

11. Quersteg nach einem der Ansprüche 1 bis 10, **dadurch gekennzeichnet, dass**
(i) der Haltebereich (11) des Quersteges (4) mit dem Verriegelungselement (8) zusammenwirkende Verliersicherungsmittel (17) aufweist, welche vorzugsweise im Führungskanal der bogenförmigen Führung für das Verriegelungselement (8) angeordnet ist,
und/oder
(ii) dass das Verriegelungselement (8) durch manuelle Betätigung verriegelbar und entriegelbar ist.

12. Seitenteil eines Kettengliedes (2) einer Energieführungskette (1) mit einem Halteabschnitt (20) zur lösbaren Festlegung eines Quersteges (4), und mit einem Quersteg (4) nach einem der Ansprüche 1 bis 11, wobei das Seitenteil (3) lateral beabstandete großflächige Seitenflächen (21) und die Seitenflächen (21) verbindende obere und untere Schmalseiten (22), welche in Kettenlängsrichtung verlaufen, aufweist, wobei der Halteabschnitt (20) für den Quersteg (4) eine in Richtung einer Seitenfläche (3) geöffnete Aussparung (23) zur Aufnahme eines Verriegelungselementes (8) eines Quersteges (4) zur verriegelten Festlegung des Quersteges (4) an dem Seitenteil (3) aufweist, um den Quersteg (4) gegen eine Beabstandung von der Seitenlasche (3) in einer Richtung quer zur Längsrichtung des Quersteges (4) zu sichern, wobei der Halteabschnitt (20) des Seitenteils (3) ausgebildet ist, einen verschwenkbaren Verriegelungsabschnitt (10) des Quersteges (4) aufzunehmen, **dadurch gekennzeichnet, dass** der Halteabschnitt (20) des Seitenteils (3) für den Quersteg (4) derart ausgebildet ist, dass der Quersteg (4) aus Richtung senkrecht zu der in Kettenlängsrichtung verlaufenden Schmalseite (22) des Seitenteils (3), im Bereich welcher der Halteabschnitt (20) angeordnet ist, bis zum Erreichen der Querstegsollposition, in welcher dieser mit dem Seitenteil mit einem Verriegelungselement (8) verriegelbar ist, lose in den Halteabschnitt des Seitenteils (3) für den Quersteg (4) einsetzbar ist, unter Heranführung des Quersteges (4) parallel zu der Verbindungslinie der einander gegenüberliegenden Haltebereiche von zwei Seitenteilen (3), welche durch den Quersteg (4) zu verbinden sind.

13. Seitenteil nach Anspruch 12 mit einem Quersteg (4), **dadurch gekennzeichnet, dass** der Halteabschnitt für den Quersteg (4) zwei seitliche Aussparungen aufweist, welche jeweils zweiseitig offen sind, nämlich einerseits zur Schmalseite (22) des Seitenteils (3) hin, an welcher der Haltebereich angeordnet ist, und andererseits in Kettenlängsrichtung, dass die Aussparungen jeweils zum Kettengliedinneren hin eine Auflagefläche (26) für in die Ausnehmung eingreifende Haltevorsprünge (27) des Quersteges aufweisen, und dass die jeweilige Aussparung eine Hinterschneidung (26) des Quersteghalteabschnittes ausbildet, welche eine Beabstandung von Seitenteil (3) und Quersteg (8) in Quersteglängsrichtung verhindert.

14. Kettenglied einer Energieführungskette (1) mit einem Quersteg (4) nach einem der Ansprüche 1 bis 11 und/oder mit einem Seitenteil (3) nach einem der Ansprüche 12 und/oder 13.

15. Kettenglied einer Energieführungskette (1) nach Anspruch 14, wobei beide Seitenteile (3) in Bezug auf die beiden Haltebereiche eines Quersteges (4) oder in Bezug auf die beiden an gegenüberliegenden Querstegenden beider Querstege (8) eines Kettengliedes (2) entsprechend Anspruch 14 und/oder 15 ausgebildet sind.

16. Energieführungskette mit Kettengliedern nach Anspruch 14 oder 15.

17. Verfahren zur Befestigung eines Seitenteils eines Kettengliedes (2) einer Energieführungskette (1) mit einem Quersteg (4), wobei der Quersteg (4) einen Halteabschnitt zur lösbaren Festlegung des Quersteges (4) an dem Seitenteil (3) aufweist, wobei das Seitenteil (3) lateral beabstandete großflächige Seitenflächen (21) und die Seitenflächen (21) verbindende obere und untere Schmalseiten (22), welche in Kettenlängsrichtung verlaufen, aufweist, wobei der Halteabschnitt (11) für den Quersteg (4) eine in Richtung einer Seitenfläche (3) geöffnete Aussparung (23) zur Aufnahme eines Verriegelungselementes (8) eines Quersteges (4) zur verriegelten Festlegung des Quersteges (4) an dem Seitenteil (3) aufweist, um den Quersteg (4) gegen eine Beabstandung von der Seitenlasche (3) in einer Richtung quer zur Längsrichtung des Quersteges (4) zu sichern, wobei der Halteabschnitt (20) des Seitenteils (3) ausgebildet ist, einen verschwenkbaren Verriegelungsabschnitt (10) des Questegees (4) aufzunehmen, **dadurch gekennzeichnet, dass** ein Seitenteil (3) bereitgestellt wird, dessen Halteabschnitt (20) für den Quersteg (4) derart ausgebildet ist, dass der Quersteg (4) aus Richtung senkrecht zu der in Kettenlängsrichtung verlaufenden Schmalseite (22) des Seitenteils (3), im Bereich welcher der Halteabschnitt (20) angeordnet ist, bis zum Erreichen der Querstegsollposition, in welcher dieser mit dem Seitenteil mit einem Verriegelungselement (8) verriegelbar ist, lose in den Halteabschnitt des Seitenteils (3) für den Quersteg (4) einsetzbar ist, und dass der Quersteg (4) parallel zu der Verbindungslinie der einander gegenüberliegenden Haltebereiche von zwei Seitenteilen (3) eines Kettengliedes (2), welche durch den Quersteg (4) zu verbinden sind, an die Seitenteile (3) herangeführt wird.

## Claims

1. Transverse bar (4) for releasably connecting two side portions (3) of a chain link (2) of an energy guide chain (1), wherein at least at one or at both of its ends the transverse bar (4) has a fixing region (7) for releasably fastening to the respective side portion (3) and wherein the fixing region (7) of the transverse bar (4) includes a locking element (8) which is transferable into a locking position and an unlocking position, wherein in the locking position the transverse bar (4) is non-releasably locked to the side portion (3) and in the unlocking position the transverse bar (4) is releasable from the side portion (3), wherein the locking element (8) includes an actuating portion (9) for selectively transferring the same into its locking or its unlocking position, and a locking portion (10) for locking engagement with the side portion (3), wherein the locking element (8) is in the form of a pivotal part and upon actuation of the locking element (8) the locking portion is moved in a pivotal movement at least in a part of its movement from the locking position into its unlocking position or vice-versa, **characterised in that** the holding region (11) of the transverse bar (4) for the locking element (8) has an arcuate guide (12) which upon actuation of the locking element (8) causes a pivotal movement thereof at least over a part of or the complete movement of the locking element between its locking position and its unlocking position.

2. Transverse bar according to claim 1, **characterised in that** the arcuate guide of the transverse bar holding region (11) for the locking element (8) has an upper arcuate guide (12a) facing towards the transverse bar top side and a lower arcuate guide (12b) facing away from the transverse bar top side for respectively guiding the locking element in a pivotal movement.

3. Transverse bar according to claim 1 or 2, **characterised in that** the arcuate guide (12) is in the form of a guide passage in which the locking portion (10) of the locking element (8) is guided.

4. Transverse bar according to claim 3, **characterised in that** the upper arcuate guide (12a) facing towards the transverse bar top side and the lower arcuate guide (12b) facing away from the transverse bar top side form a guide passage for the locking element (8) between them and that the locking element (8) is guided in the guide passage.

5. Transverse bar according to one of claims 1 to 4, **characterised in that** the locking portion (10) of the locking element (8) is of an arcuate configuration.

6. Transverse bar according to one of claims 1 to 5, **characterised in that** the locking portion (10) of the locking element (8) is guided in the arcuate guide of the transverse bar holding region (11) for the locking element (8) .

7. Transverse bar according to one of claims 1 to 6, **characterised in that** the actuating region (9) of the locking element (8) projects laterally from the locking portion (10) thereof.

8. Transverse bar according to one of claims 1 to 7, **characterised in that**
(i) the locking element (8) is in the form of a substantially rigid component,
and/or
(ii) at its end region the locking portion (10) of the locking element (8) has a flat contact surface (14) for contact with a holding region (11) of the side portion (3).

9. Transverse bar according to one of claims 1 to 8, **characterised in that** on the one hand the locking element (8) and on the other hand the transverse bar holding region (11) of the side portion (3) for the locking element (8) or the transverse bar (4) has corresponding latching means (15) for fastening the locking element (8) in its locking position.

10. Transverse bar according to claim 9, **characterised in that** the latching means (15) are arranged in the guide passage of the arcuate guide for the locking element (8).

11. Transverse bar according to one of claims 1 to 10, **characterised in that**
(i) the holding region (11) of the transverse bar (4) has retainer means (17) which cooperate with the locking element (8) and which are preferably arranged in the guide passage of the arcuate guide for the locking element (8) and/or
(ii) the locking element (8) can be locked and unlocked by manual actuation.

12. Side portion of a chain link (2) of an energy guide chain (1) having a holding portion (20) for releasably fastening a transverse bar (4) and having a transverse bar (4) according to one of claims 1 to 11, wherein the lateral portion (3) has laterally spaced large-area side surfaces (21) and upper and lower narrow sides (22) which connect the side surfaces and which extend in the longitudinal direction of the chain, wherein the holding portion (20) for the transverse bar (4) has a recess (23) which is open in the direction of side surface (3) for receiving a locking element (8) of a transverse bar (4) for lockingly fastening the transverse bar (4) to the side portion (3) in order to secure the transverse bar (4) against a spacing from the side plate (3) in a direction transversely relative to the longitudinal direction of the transverse bar (4), wherein the holding portion (20) of the side portion (3) is of such a configuration that it can receive a pivotable locking portion (10) of the transverse bar (4), **characterised in that** the holding portion (20) of the side portion (3) for the transverse bar (4) is of such a configuration that the transverse bar (4) can be loosely inserted into the holding portion of the side portion (3) for the transverse bar (4), while bringing the transverse bar (4) parallel to the connecting line of the opposing holding regions of two side parts (3) which are to be connected by the transverse bar (4), from a direction perpendicularly to the narrow side (22) of the side portion (3), extending in the longitudinal direction of the chain, in the region of which the holding portion (20) is arranged, until reaching the transverse bar target position in which it is lockable with the side portion with a locking element (8).

13. Side portion according to claim 12 having a transverse bar (4), **characterised in that** the holding portion for the transverse bar (4) has two lateral recesses which are each respectively open at two sides, namely on the one hand towards the narrow side (22) of the side portion (3) at which the holding region is arranged and on the other hand in the longitudinal direction of the chain, the recesses respectively have facing towards the interior of the chain link a contact surface (26) for holding projections (27) of the transverse bar that engage into the recess, and the respective recess has an undercut configuration (26) of the transverse bar holding portion, which prevents a spacing of the side portion (3) and the transverse bar (8) in the transverse bar longitudinal direction.

14. Chain link of an energy guide chain (1) having a transverse bar (4) according to one of claims 1 to 11 and/or a side portion (3) according to one of claims 12 and/or 13.

15. Chain link of an energy guide chain (1) according to claim 14, wherein both side portions (3) in relation to the two holding regions of a transverse bar (4) or in relation to the two oppositely disposed transverse bar ends of both transverse bars (8) of a chain link (2) are in accordance with claim 14 and/or 15.

16. Energy guide chain comprising chain links according to claim 14 or claim 15.

17. Method for fastening a side portion of a chain link (2) of an energy guide chain (1) with a transverse bar (4), wherein the transverse bar (4) has a holding portion for releasably fastening the transverse bar (4) to the side portion (3), wherein the side portion (3) has laterally spaced large-area side surfaces (21) and upper and lower narrow sides (22) which connect the side surfaces (21) and which extend in the longitudinal direction of the chain, wherein the holding portion (11) for the transverse bar (4) has a recess (23) which is open in the direction of side surface (3) for receiving a locking element (8) of a transverse bar (4) for lockingly fastening the transverse bar (4) to the side portion (3) in order to secure the transverse bar (4) against a spacing from the side plate (3) in a direction transversely relative to the longitudinal direction of the transverse bar (4), wherein the holding portion (20) of the side portion (3) is of such a configuration that it can receive a pivotable locking portion (10) of the transverse bar (4), **characterised in that** a side portion (3) is provided, the holding portion (20) for the transverse bar (4) of which is of such a configuration that the transverse bar (4) can be loosely inserted into the holding portion of the side portion (3) for the transverse bar (4) from a direction perpendicularly to the narrow side (22) of the side portion (3), extending in the longitudinal direction of the chain, in the region of which the holding portion (20) is arranged, until reaching the transverse bar target position in which it is lockable with the side portion with a locking element (8), and that the crossbar (4) is brought parallel to the connecting line of the opposing holding regions of two side parts (3) of a chain link (2), which are to be connected by the crossbar (4).

## Revendications

1. Traverse (4) pour relier de manière amovible deux parties latérales (3) d'un maillon de chaîne (2) d'une chaîne de guidage d'énergie (1), dans laquelle la traverse (4) possède, au moins à l'une de ses extrémités ou aux deux, une zone de fixation (7) pour la fixation amovible à la partie latérale respective (3) et dans laquelle la zone de fixation (7) de la transverse (4) comprend un élément de verrouillage (8) qui peut être transféré dans une position de verrouillage et dans une position de déverrouillage, dans laquelle en position de verrouillage, la traverse (4) est verrouillée de manière non détachable à la partie latérale (3) et, en position de déverrouillage, la traverse (4) est détachable de la partie latérale (3), dans laquelle l'élément de verrouillage (8) comprend une partie d'actionnement (9) pour le transférer sélectivement dans sa position de verrouillage ou sa position de déverrouillage, et une partie de verrouillage (10) pour un engagement verrouillé avec la partie latérale (3), dans laquelle l'élément de verrouillage (8) se présente sous la forme d'une pièce pivotante et, lors de l'actionnement de l'élément de verrouillage (8), la partie de verrouillage est déplacée dans un mouvement pivotant au moins dans une partie de son mouvement de la position de verrouillage à sa position de déverrouillage, ou vice-versa, **caractérisé en ce que** la zone de retenue (11) de la traverse (4) pour l'élément de verrouillage (8) comporte un guide arqué (12) qui, lors de l'actionnement de l'élément de verrouillage (8), provoque un mouvement de pivotement de celui-ci au moins sur une partie ou sur la totalité du mouvement de l'élément de verrouillage entre sa position de verrouillage et sa position de déverrouillage.

2. Traverse selon la revendication 1, **caractérisée en ce que** le guide arqué de la zone de retenue de traverse (11) pour l'élément de verrouillage (8) comporte un guide arqué supérieur (12a) orienté vers le côté supérieur de la traverse et un guide arqué inférieur (12b) orienté à l'opposé du côté supérieur de la traverse pour guider respectivement l'élément de verrouillage dans un mouvement de pivotement.

3. Traverse selon la revendication 1 ou 2, **caractérisée en ce que** le guide arqué (12) se présente sous la forme d'un passage de guidage dans lequel la partie de verrouillage (10) de l'élément de verrouillage (8) est guidée.

4. Traverse selon la revendication 3, **caractérisée en ce que** le guide arqué supérieur (12a) orienté vers le côté supérieur de la traverse et le guide arqué inférieur (12b) orienté à l'opposé du côté supérieur de la traverse forment un passage de guidage pour l'élément de verrouillage (8) entre eux et **en ce que** l'élément de verrouillage (8) est guidé dans le passage de guidage.

5. Traverse selon l'une des revendications 1 à 4, **caractérisée en ce que** la partie de verrouillage (10) de l'élément de verrouillage (8) est de configuration arquée.

6. Traverse selon l'une des revendications 1 à 5, **caractérisée en ce que** la partie de verrouillage (10) de l'élément de verrouillage (8) est guidée dans le guide arqué de la zone de retenue de traverse (11) pour l'élément de verrouillage (8) .

7. Traverse selon l'une des revendications 1 à 6, **caractérisée en ce que** la partie d'actionnement (9) de l'élément de verrouillage (8) fait saillie latéralement par rapport à sa partie de verrouillage (10).

8. Traverse selon l'une des revendications 1 à 7, **caractérisée en ce que**
(i) l'élément de verrouillage (8) se présente sous la forme d'un composant sensiblement rigide,
et/ou
(ii) à son extrémité, la partie de verrouillage (10) de l'élément de verrouillage (8) présente une surface de contact plate (14) pour le contact avec la zone de retenue (11) de la partie latérale (3).

9. Traverse selon l'une des revendications 1 à 8, **caractérisée en ce que**, d'une part, l'élément de verrouillage (8) et, d'autre part, la zone de retenue de traverse (11) de la partie latérale (3) pour l'élément de verrouillage (8) ou la traverse (4) présente des moyens d'encliquetage correspondants (15) pour fixer l'élément de verrouillage (8) dans sa position de verrouillage.

10. Traverse selon la revendication 9, **caractérisée en ce que** les moyens d'encliquetage (15) sont disposés dans le passage de guidage du guide arqué pour l'élément de verrouillage (8).

11. Traverse selon l'une des revendications 1 à 10, **caractérisée en ce que**
(i) la zone de retenue (11) de la traverse (4) comporte des moyens de protection contre la perte (17) qui coopèrent avec l'élément de verrouillage (8) et qui sont de préférence disposés dans le passage de guidage du guide arqué pour l'élément de verrouillage (8)
et/ou
(ii) l'élément de verrouillage (8) peut être verrouillé et déverrouillé par actionnement manuel.

12. Partie latérale d'un maillon de chaîne (2) d'une chaîne de guidage d'énergie (1) comportant une partie de retenue (20) pour la fixation amovible d'une traverse (4) et comportant une traverse (4) selon l'une des revendications 1 à 11, dans laquelle la partie latérale (3) présente des surfaces latérales (21) de grande surface espacées latéralement et des côtés étroits supérieurs et inférieurs (22) qui relient les surfaces latérales et qui s'étendent dans la direction longitudinale de la chaîne, dans laquelle la partie de retenue (20) pour la traverse (4) présente un évidement (23) ouvert dans la direction de la surface latérale (3) pour recevoir un élément de verrouillage (8) d'une traverse (4) pour fixer de manière verrouillée la traverse (4) à la partie latérale (3) afin de sécuriser la traverse (4) contre un espacement de la plaque latérale (3) dans une direction transversale par rapport à la direction longitudinale de la traverse (4), dans laquelle la partie de retenue (20) de la partie latérale (3) est d'une configuration telle qu'elle peut recevoir une partie de verrouillage pivotante (10) de la traverse (4), **caractérisée en ce que** la partie de retenue (20) de la partie latérale (3) pour la traverse (4) est d'une configuration telle que la traverse (4) peut être insérée librement dans la partie de retenue de la partie latérale (3) pour la traverse (4), en amenant la traverse (4) parallèlement à la ligne de jonction des zones de retenues opposées des deux parties latérales (3) qui doivent être reliées par la traverse (4), à partir d'une direction perpendiculaire au côté étroit (22) de la partie latérale (3), s'étendant dans la direction longitudinale de la chaîne, dans la zone de laquelle la partie de retenue (20) est disposée, jusqu'à atteindre la position cible de la traverse dans laquelle elle peut être verrouillée avec la partie latérale à l'aide d'un élément de verrouillage (8).

13. Partie latérale selon la revendication 12 comportant une traverse (4), **caractérisée en ce que** la partie de retenue pour la traverse (4) comporte deux évidements latéraux qui sont respectivement ouverts de deux côtés, à savoir d'une part vers le côté étroit (22) de la partie latérale (3) dans laquelle la zone de retenue est disposée et d'autre part dans la direction longitudinale de la chaîne, les évidements comportent respectivement une surface de contact (26) orientée vers l'intérieur du maillon de la chaîne destinés à recevoir des saillies de retenue (27) de la traverse qui s'engagent dans l'évidement, et l'évidement respectif présente une configuration de contre-dépouille (26) de la partie de retenue de traverse, qui empêche un espacement de la partie latérale (3) et de la traverse (8) dans la direction longitudinale de la traverse.

14. Maillon d'une chaîne de guidage d'énergie (1) comportant une traverse (4) selon l'une des revendications 1 à 11 et/ou une partie latérale (3) selon l'une des revendications 12 et/ou 13.

15. Maillon d'une chaîne de guidage d'énergie (1) selon la revendication 14, dans lequel les deux parties latérales (3) en relation avec les deux zones de retenue d'une traverse (4) ou en relation avec les deux extrémités de traverse disposées de manière opposée des deux traverses (8) d'un maillon de chaîne (2) sont formées selon la revendication 14 et/ou 15.

16. Chaîne de guidage d'énergie comprenant des maillons de chaîne selon la revendication 14 ou la revendication 15.

17. Procédé de fixation d'une partie latérale d'un maillon de chaîne (2) d'une chaîne de guidage d'énergie (1) avec une traverse (4), dans lequel la traverse (4) a une partie de retenue pour fixer de manière amovible la traverse (4) à la partie latérale (3), dans lequel la partie latérale (3) a des surfaces latérales de grande surface espacées latéralement (21) et des côtés étroits supérieurs et inférieurs (22) qui relient les surfaces latérales (21) et qui s'étendent dans la direction longitudinale de la chaîne, dans lequel la partie de retenue (11) pour la traverse (4) présente un évidement (23) ouvert en direction de la surface latérale (3) pour recevoir un élément de verrouillage (8) d'une traverse (4) pour fixer la traverse (4) de manière verrouillée à la partie latérale (3) afin de sécuriser la traverse (4) contre un espacement de la plaque latérale (3) dans une direction transversale par rapport à la direction longitudinale de la traverse (4), dans lequel la partie de retenue (20) de la partie latérale (3) est d'une configuration telle qu'elle peut recevoir une partie de verrouillage pivotante (10) de la traverse (4), **caractérisé en ce qu'**une partie latérale (3) est fournie, dont la partie de retenue (20) pour la traverse (4) est d'une configuration telle que la traverse (4) peut être insérée librement dans la partie de retenue de la partie latérale (3) pour la traverse (4) à partir d'une direction perpendiculaire au côté étroit (22) de la partie latérale (3), en s'étendant dans la direction longitudinale de la chaîne, dans la zone de laquelle où la partie de retenue (20) est disposée, jusqu'à atteindre la position cible de la traverse dans laquelle elle peut être verrouillée avec la partie latérale à l'aide d'un élément de verrouillage (8), et que la traverse (4) est amenée parallèlement à la ligne de connexion des zones de retenue opposées de deux parties latérales (3) d'un maillon de chaîne (2), qui doivent être reliées par la traverse (4).
